# EUROPEAN PATENT SPECIFICATION

(11) **EP 4 252 999 B1**
(45) Date of publication and mention of the grant of the patent: **20.05.2026**
(21) Application number: 23164545.8
(22) Date of filing: 28.03.2023
(51) Int. Cl.: B29C 45/40, B29C 45/76, B29C 45/84

(54) **APPARATUS FOR TAKING OUT MOLDED PRODUCT**
VORRICHTUNG ZUM ENTNEHMEN VON GEFORMTEN PRODUKTEN
APPAREIL POUR RETIRER LE PRODUIT MOULÉ

(30) Priority: 31.03.2022 JP 2022058596; 17.03.2023 JP 2023042784
(43) Date of publication of application: 04.10.2023
(73) Proprietor: Yushin Precision Equipment Co. , Ltd., Kyoto (JP)
(72) Inventor: ANDO, Kazutaka, Kyoto, Japan (JP); SHIRASAKI, Atsushi, Kyoto, Japan (JP)
(74) Representative: Wilson Gunn

(56) References cited:
- EP-A1- 2 746 744
- EP-A1- 2 897 013
- JP-A- 2008 238 723
- US-A1- 2008 111 264
- US-A1- 2013 004 609

## Description

### TECHNICAL FIELD

The present invention relates to an apparatus for taking out a molded product, the apparatus being configured to display information that facilitates teaching on a display screen.

### BACKGROUND ART

Japanese Unexamined Patent Application Publication No. 2019-018349 (JPA 2019018349) discloses a technique of chronologically storing a plurality of operation times, measuring a plurality of cycle times, and chronologically displaying computed differences between the cycle times on a display screen.

Japanese Unexamined Patent Application Publication No. 2006-305932 (JPA 2006305932) discloses a technique of displaying fluctuations of a monitoring target (such as a charge time, a time of metering a molten resin in a barrel, and a time of taking out a molded product from a die) with respect to a reference value in a cycle time required to mold a molded product.

Japanese Patent No. 4815077 (JP 4815077) discloses a technique of detecting an operation time of a mobile body and comparing the detected value with an upper limit value and a lower limit value set based on an execution value obtained in advance through trial operation.
US 2013/004609A1 describes an apparatus for taking out a molded product. JP2008238723A describes a controller for molding take-out machine. EP2746744A1 describes a detecting apparatus, detecting method, program and recording medium. EP2897013A1 describes a monitoring device, monitoring method, program, and recording medium.

### SUMMARY OF INVENTION

### TECHNICAL PROBLEM

JPA 2019018349, JPA 2006305932, and JP 4815077 disclose displaying a part of information that helps make an adjustment to shorten the take-out time and the cycle time. However, such publications do not disclose a technique that is suitable for facilitating teaching when making an adjustment to shorten the take-out time and the cycle time. The publications also do not disclose a technique that is suitable for helping a worker to change a set operation sequence. To shorten the take-out time, it is first conceivable to set the speed to a high speed. However, an adjustment is made to reduce acceleration and deceleration at the same time, since a vibration is occasionally increased. When the stroke of movement is short, the take-out time may not be shortened even if the speed is set to a high speed, as the actual speed is not raised to the set speed. In such a case, an adjustment is made to increase acceleration and deceleration at a maximum as long as the vibration is allowable. Thus, it is difficult to shorten the take-out time by simply increasing the speed, and it is necessary to adjust a plurality of parameters, namely speed and acceleration and deceleration, while checking the degree of vibration. It is occasionally desired to shorten the cycle time, aside from the take-out time. Assuming that a product is delivered on the release side to a following machine in the process, for example, it is necessary to cause an apparatus for taking out a molded product to operate such that the timing of delivery to the following machine in the process and the release timing match each other. A product is released by performing transverse operation and lowering operation after the product is taken out. When operation of a take-out robot does not catch up with the machine in the following process, it is necessary to speed up the transverse operation or the lowering operation. Speeding up the transverse operation increases power consumption, since the movable mass is large. On the other hand, speeding up the vertical operation increases the vibration of an arm during delivery. Thus, it is necessary to make an adjustment while keeping the balance for each operation. That is, making an adjustment to shorten the take-out time and the cycle time is not so simple as to achieve by speeding up specific operation, but requires an advanced processing to be in time for a desired time while checking a vibration and a take-out error or a delivery error due to the vibration.

However, there has hardly been provided a technique of providing a worker with information necessary to support the worker in at least one of suppressing generation of a vibration, suppressing power consumption, and suppressing an air consumption amount when adjusting parameters.

Accordingly, an object of the present invention is to provide an apparatus for taking out a molded product, the apparatus being capable of displaying information necessary to enable at least one of suppressing generation of a vibration, suppressing power consumption, and suppressing an air consumption amount.

### SOLUTION TO PROBLEM

The present invention provides an apparatus for taking out a molded product, the apparatus including an operation control section, a parameter setting-change section, a setting condition storage section, a state measurement section, a measurement result storage section, and an increase-decrease amount computation-display section. The operation control section controls operation to cause one or more operation portions, including a take-out head, to operate according to an operation sequence set in advance through teaching and stored in a storage section to take out a molded product using the take-out head from a die of a molding apparatus with the die being opened, and to carry the molded product to a predetermined position and release the molded product. The parameter setting-change section sets a plurality of parameters during the teaching, and changes at least one of the plurality of parameters after setting the operation sequence. The setting condition storage section stores a setting condition for the parameters set by the parameter setting-change section and the at least one of the plurality of parameters changed by the parameter setting-change section. The state measurement section measures at least a vibration generated in the one or more operation portions during a period of one cycle since a plurality of setting operations are started until the setting operations are completed according to the operation sequence. Here, the one of more operation portions are determined in advance. The measurement result storage section stores a result of a measurement performed by the state measurement section for each cycle or for each process of the operation sequence. The increase-decrease amount computation-display section computes an increase-decrease amount of at least the vibration generated in the one or more operation portions for each cycle or for each process of the operation sequence based on data stored in the measurement result storage section when the teaching is performed and when a setting condition for the operation sequence stored in the operation sequence storage section is changed, and displays the increase-decrease amount on a display section so as to be checked.

In the present invention, an increase-decrease amount is computed in respect of at least the vibration generated in the one or more operation portions, and optionally the amount of power consumed by the one or more operation portions, and optionally the amount of air consumed by the one or more operation portions for each cycle or for each process of the operation sequence stored in the operation sequence storage section when the teaching is performed and when the setting condition for the operation sequence is changed, and the increase-decrease amount is displayed on the display section so as to be checked. Thus, a worker that adjusts the parameters can be provided with information for intuitively or sensuously determining whether or not the adjustment is appropriate. As a result, it is possible to facilitate the adjustment of the parameters and shorten the time of the adjustment.

In the case of a three-axis apparatus for taking out a molded product, for example, the operation portions include the take-out head, a head mount portion such as a posture change portion to which the take-out head is mounted, and a movable portion that constitutes the apparatus such as an elevating frame, to the distal end of which the head mount portion is disposed, and include a motor and an air compressor as drive sources. The vibration can be detected by an acceleration sensor, for example. The power can be measured by a power computation circuit configured to compute power based on outputs from a current sensor and a voltage sensor mounted to a power supply circuit, for example. The air consumption amount can be measured using a flowmeter disposed in an air supply path.

Preferably, the increase-decrease amount computation-display section includes a computation section configured to compute the increase-decrease amount based on a preceding measurement result and a current measurement result stored in the measurement result storage section, and a display control section configured to display the increase-decrease amount on the display section for each cycle or for each process of the operation sequence. Preferably, the apparatus further includes an operation time measurement section configured to measure an operation time since the operations are started until the operations are completed in respect of one or more of the plurality of setting operations. Preferably, the measurement result storage section stores the operation time measured by the operation time measurement section along with the measurement result; and the increase-decrease amount computation-display section synchronously displays an increase-decrease amount of the operation time on the display section along with the increase-decrease amount of the at least the vibration, and optionally the amount of consumed power, and optionally the amount of consumed air. This allows the worker to be informed of information for determining a time reduction, which makes it possible to achieve the time shortening effect while appropriately adjusting the parameters.

The increase-decrease amount computation-display section may display the changed parameter on the display section along with the increase-decrease amount. This allows the worker to appropriately adjust the parameters while accurately recognizing the changed parameter.

The at least one of the parameters includes any of a stop position at which the take-out head or a take-out head mount portion to which the take-out head is mounted is stopped at a teaching point, a timer time limit for which the take-out head is kept stationary, a speed or an acceleration at which the take-out head or the take-out head mount portion is moved, a drive voltage, a drive current, or drive torque for a drive motor for the apparatus, and a degree of opening or an open or close time of a control valve disposed in an air supply path for the take-out head.

The vibration is generated by the take-out head, a take-out head mount portion to which the take-out head is mounted, or a posture change device operable to change a posture of the take-out head; the state measurement section is a vibration amplitude measurement section configured to detect a frequency or an amplitude of the vibration; and the vibration amplitude measurement section measures a vibration generated at every teaching point or a teaching point determined in advance in the operation sequence, and measures the vibration in each cycle of the operation sequence or for each operation process of the operation sequence.

The state measurement section may further measure an amount of power consumed by the one or more operation portions. The amount of consumed power is an amount of power consumed by a motor for driving the apparatus for taking out a molded product; the state measurement section is a power measurement section configured to measure power to be supplied to the motor for driving the apparatus; and the power measurement section measures an amount of power supplied to the electric motor in each cycle of the operation sequence or for each process of the operation sequence.

The state measurement section may further measure an amount of air consumed by one or more operation portions. The amount of consumed air is an amount of air consumed by an air compressor of the apparatus for taking out a molded product; the state measurement section is an air amount measurement section configured to measure an amount of air output from the air compressor; and the air amount measurement section measures an amount of air output from the air compressor in each cycle of the operation sequence or for each process of the operation sequence.

### BRIEF DESCRIPTION OF DRAWINGS

Fig. 1 is a block diagram illustrating main components of the configuration of an apparatus for taking out a molded product according to the present embodiment, the apparatus being configured to take out a molded product from a molding apparatus.
Fig. 2 illustrates operation processes set by an operation sequence.
Figs. 3A to 3C are each a block diagram illustrating an example of the configuration of a state measurement section.
Fig. 4 illustrates an example display on a display screen according to Example 1.
Fig. 5 illustrates an example of a set value change input screen.
Fig. 6 illustrates an example display on the display screen according to Example 2.

### DESCRIPTION OF EMBODIMENTS

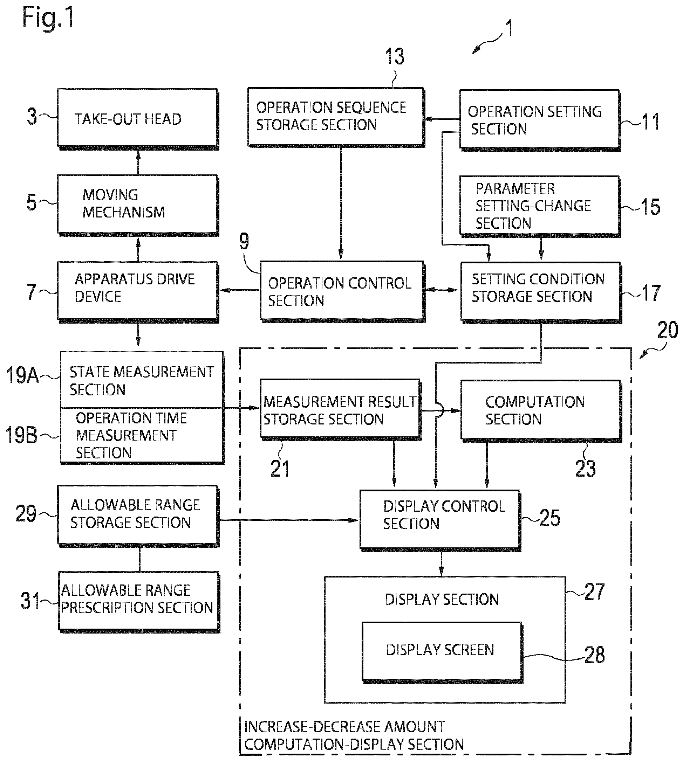

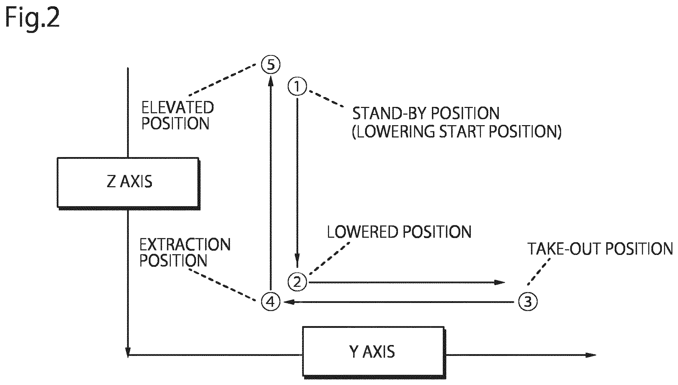

An apparatus for taking out a molded product according to an embodiment of the present invention will be described in detail below with reference to the drawings. Fig. 1 is a block diagram illustrating main components of the configuration of an apparatus for taking out a molded product according to the present embodiment, the apparatus being configured to take out a molded product from a molding apparatus. The apparatus 1 includes a take-out head 3 that includes a suction nozzle etc., a moving mechanism 5 operable to move the take-out head 3, an apparatus drive device 7 operable to drive the moving mechanism 5, and an operation control section 9 configured to provide an operation instruction to the apparatus drive device 7. When the moving mechanism 5 is a known three-axis moving mechanism, that is, a moving mechanism having X, Y, and Z axes, and performs a take-out operation to take out a molded product as illustrated in Fig. 2, the moving mechanism 5 moves the take-out head 3 including the suction nozzle along the Z axis and the Y axis in the order of a stand-by position (lowering start position), a lowered position, a take-out position, an extraction position, and an elevated position. At the take-out position, the moving mechanism 5 takes out a molded product, which is pushed out of a molding die of a molding apparatus by means of protruding operation of an ejector pin, through suctioning by the suction nozzle. After that, the moving mechanism 5 moves the take-out head 3 mounted with the suction nozzle from the elevated position to a release position (not illustrated). At the release position, the suctioning by the suction nozzle is canceled to release the molded product.

The operation control section 9 is configured to include a computation device such as a central processing unit (CPU), and executes control for actuation of the suction nozzle and control for the apparatus drive device 7 which drives the moving mechanism 5. In the present embodiment, the operation control section 9 controls operation to cause the moving mechanism 5 to operate according to an operation sequence set in advance by the operation setting section 11 during teaching and stored in an operation sequence storage section 13 to move the take-out head 3, to take out a molded product using the take-out head 3 from a die of a molding apparatus with the die being opened, and to carry the molded product to a predetermined position and release the molded product.

In the present embodiment, the apparatus 1 also includes a setting condition storage section 17 configured to store a plurality of parameters set by a parameter setting-change section 15 and setting conditions for some changed parameters as discussed later, a state measurement section 19A and an operation time measurement section 19B for collecting information, and an increase-decrease amount computation-display section 20. The state measurement section 19A includes: a vibration amplitude measurement section 19AX configured to measure a vibration generated in the one or more operation portions during a period of one cycle since a plurality of setting operations are started until the setting operations are completed according to the operation sequence. Here, the one of more operation portions are determined in advance. The state measurement section 19A also includes a power measurement section 19AY configured to measure an amount of power consumed by the one or more operation portions, and an air amount measurement section 19AZ configured to measure an amount of air consumed by the one or more operation portions.

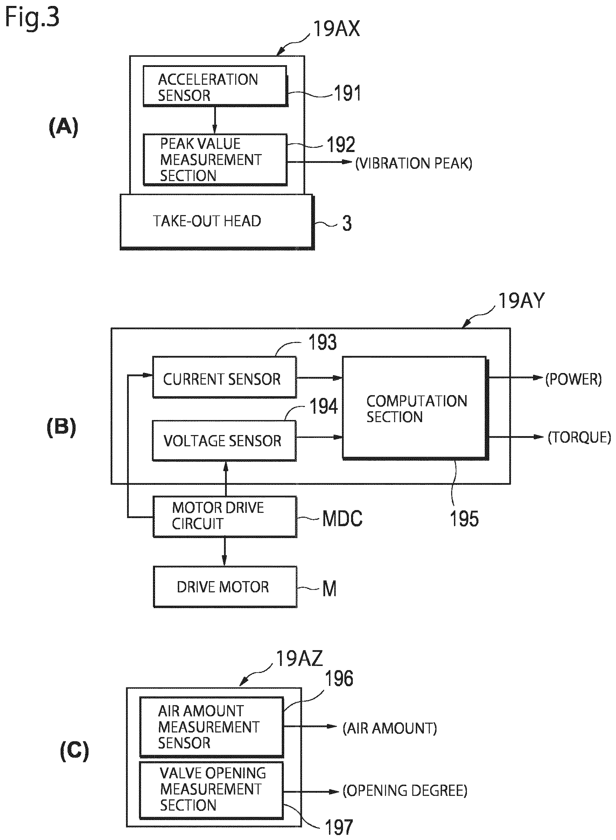

Fig. 3A is a block diagram illustrating an example of the configuration of the vibration amplitude measurement section 19AX which is a kind of the state measurement section 19A that measures a vibration. The vibration amplitude measurement section 19A includes an acceleration sensor 191 and a peak value measurement section 192 to detect the frequency or a peak in the amplitude of the vibration generated by the take-out head 3 (or a take-out head mount portion to which the take-out head is mounted or a posture change device operable to change a posture of the take-out head). The vibration amplitude measurement section 19AX measures a vibration generated at every teaching point or a teaching point determined in advance in the operation sequence, and measures the vibration in each cycle of the operation sequence or for each operation process of the operation sequence.

Fig. 3B is a block diagram illustrating an example of the configuration of the power measurement section 19AY which is a kind of the state measurement section 19A configured to measure an amount of consumed power. The most of the amount of power consumed by the apparatus is an amount of power consumed by an electric motor M for driving the apparatus. Thus, the power measurement section 19AY measures power to be supplied to the electric motor. The power measurement section 19AY includes a voltage sensor 194 configured to measure a voltage to be applied to a power supply path in a motor drive circuit MDC, a current sensor 193 configured to measure a flowing current, and a computation section 195 configured to compute power based on the current and the voltage. The computation section 195 that is used in the present embodiment also computes drive torque for the electric motor M for driving. The power measurement section 19AY measures an amount of power supplied to the electric motor M in each cycle of the operation sequence or for each process of the operation sequence. While a plurality of power measurement sections 19AY are provided when a plurality of electric motors are used in the present embodiment, the power measurement section 19AY may be provided to detect an output voltage and an output current for the entire power source unit as a matter of course.

Fig. 3C is a block diagram illustrating an example of the configuration of the air amount measurement section 19AZ which is a kind of the state measurement section 19A that measures an amount of air output from an air compressor and a valve opening degree. The air amount measurement section 19AZ includes an air amount measurement sensor 196 composed of a flow rate sensor etc. and a valve opening measurement section 197 configured to measure the degree of opening or the open or close time of a control valve disposed in an air supply path for the take-out head. The air amount measurement section 19AZ measures an amount of air output from the air compressor in each cycle of the operation sequence or for each process of the operation sequence.

The operation time measurement section 19B counts the actual operation time since a plurality of setting operations are started according to the operation sequence until the setting operations are completed. The operation time measurement section 19B counts the actual operation time t of the take-out head 3, which is moved by the moving mechanism 5, based on an output from an encoder mounted to a servomotor included in the apparatus drive device 7 and count information from a CPU mounted to the servomotor, for example. Specifically, the operation time measurement section 19B counts the operation time by detecting motion of the servomotor, which operates from a start position to a target position, based on an output from the encoder and counting clocks from the CPU until the operation is stopped.

The increase-decrease amount computation-display section 20 includes a measurement result storage section 21, a computation section 23, a display control section 25, and a display section 27. The measurement result storage section 21 stores the result of a measurement performed by the state measurement section 19A and the operation time measurement section 19B. The computation section 23 computes an increase-decrease amount of the measurement data etc. as needed. The display control section 25 causes the computation section 23 to compute an increase-decrease amount of the vibration generated in the one or more operation portions, the amount of power consumed by the one or more operation portions, and the amount of air consumed by the one or more operation portions for each cycle or for each process of the operation sequence based on data stored in the measurement result storage section 21 when the teaching is performed and when a setting condition for the operation sequence stored in the operation sequence storage section 13 is changed, and causes the display section 27 to display, on a display screen 28, the increase-decrease amount so as to be checked. The display control section 25 may display the changed parameter on the display section 27 along with the increase-decrease amount. This allows the worker to appropriately adjust the parameters while accurately recognizing the changed parameter.

At least one of the parameters includes any of a stop position at which the take-out head 3 or a take-out head mount portion to which the take-out head is mounted is stopped at a teaching point, a timer time limit for which the take-out head 3 is kept stationary, a speed or an acceleration at which the take-out head or the take-out head mount portion is moved, a drive voltage, a drive current, or drive torque for a drive motor for the apparatus, and a degree of opening or an open or close time of a control valve disposed in an air supply path for the take-out head.

In the present embodiment, the apparatus 1 further includes an allowable range storage section 29 configured to store an allowable range of the at least one of the parameters. The allowable range is prescribed by an allowable range prescription section 31. The allowable range prescription section 31 may cause the allowable range storage section 29 to store an allowable range of each of the parameters as a table determined in advance through testing, or may prescribe an allowable range based on a computation formula determined in advance from a test result. For example, an allowable range is determined by a minimum value and a maximum value of a speed or an acceleration of each operation portion in each process of the operation sequence when the vibration is to be suppressed and the parameter is the speed or the acceleration of the operation portion. Or, an allowable range is determined by a target maximum amount of power when the consumed power is to be suppressed. Or, an allowable range is determined by a target maximum amount of consumed air when the amount of consumed air is to be suppressed. Preferably, the allowable range of at least one of the parameters is prescribed for each cycle or for each process of the operation sequence with a constraint that the take-out time and the cycle time fall within a predetermined time range.

The increase-decrease amount computation-display section 20 causes the display section 27 to display, on the display screen 28, an allowable range of at least one of the parameters that has been set or changed for each cycle or for each process of the operation sequence when the teaching is performed and when a setting condition for the operation sequence stored in the operation sequence storage section 13 is changed. As a result, with the present embodiment, even an inexperienced worker can adjust the parameters while checking display of the allowable range.

### [Example 1]

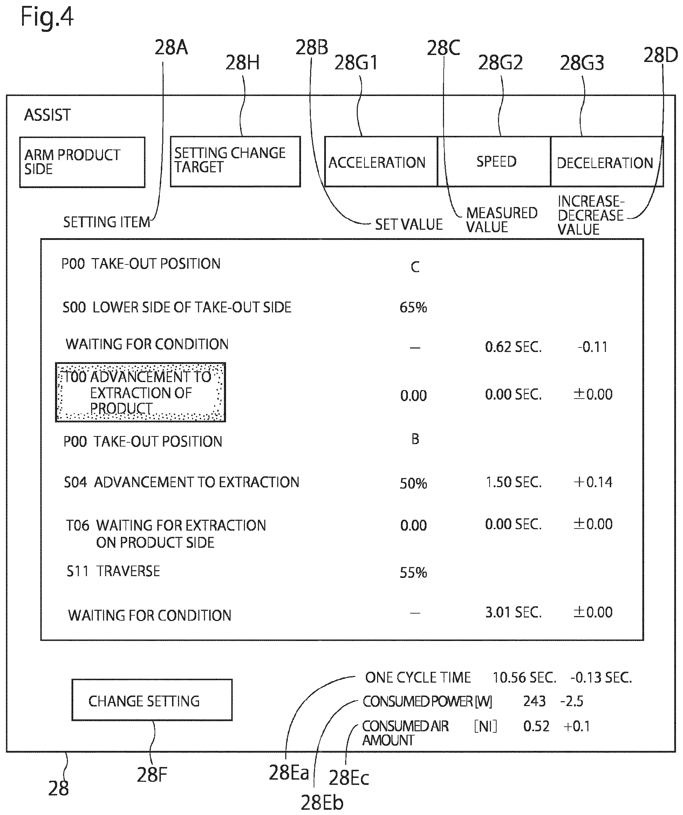

Fig. 4 illustrates an example display on the display screen 28 at the time when assistance is provided in the teaching. In this example, a setting item field 28A indicates symbols "P00", "S00", etc. for identification of setting operations and items "take-out position", "take-out side lower side; waiting for condition", "waiting for advancement to extraction of product", etc. In the present embodiment, the display section 27 has a touch switch function that allows turning on and off a switch by touching a button (switch portion) on the display screen 28. In the present embodiment, the display section 27 also serves as a display section of a controller for the apparatus 1. The operation of the take-out head 3 to move among the plurality of positions discussed earlier and illustrated in Fig. 2 corresponds to the "plurality of setting operations", and the time since the movement among the positions is started until the movement is completed corresponds to the "actual operation time".

A set value field 28B indicates a set value (parameter setting condition) for each setting operation set by the operation setting section 11 and stored in the setting condition storage section 17. The set value is displayed in terms of "%" with the maximum value of the physical set value to be set for the setting operation being defined as 100%. In the present embodiment, the set values as a plurality of parameter setting conditions set by the operation setting section 11 and stored in the setting condition storage section 17 include a speed, an acceleration, and a deceleration to be set for the setting operations, and physical set values such as take-out position information and a timer setting time. When the set values are a speed, an acceleration, and a deceleration, for example, the set values are displayed with the maximum value of such set values being defined as 100%. In the present embodiment, physical setting in the setting operations is selected when any of an "acceleration" button 28G1, a "speed" button 28G2, and a "deceleration" button 28G3 is pressed as an individual button 29G1, 28G2, or 28G3 in Fig. 4 is pressed. When the individual setting button is not pressed, a physical set value determined in advance for each setting operation is automatically selected. Displaying the set values in terms of % allows intuitively determining the magnitude of the set values.

In Fig. 4, "S04: "advancement to extraction" is a setting operation, and when individual setting for "speed" is made, the set value of "50%" indicates that a speed of "50%" has bene set with the maximum value of the settable speed being defined as 100%. Set values for a plurality of setting operations are effective in shortening the time for the teaching. In particular, selecting or adjusting a speed, an acceleration, a deceleration, or a timer for setting operations is effective in shortening the cycle time.

Further, a measured value field 28C in Fig. 4 indicates an operation time t actually measured in each setting operation. For the setting operation "S04: advancement to extraction", the measured value (actual operation time) of "1.50 seconds" is the actual time required for the take-out head to move from the "lowered position" to the "take-out position" in Fig. 2. Knowing the actual operation time allows actually feeling whether the setting is good or bad at actual time intervals.

An increase-decrease value field 28D in Fig. 4 indicates, as an increase-decrease value (increase-decrease amount), the result of the computation section 23 which computes an increase-decrease amount of the actual operation time t from time-series data obtained by chronologically storing the result of the measurement performed by the operation time measurement section 19B and stored in the measurement result storage section 21. The increase-decrease value corresponds to the difference (tf - tl) between an actual operation time tf in the preceding cycle and an operation time tl in the following cycle. Displaying the increase-decrease value (amount) allows making a quick determination as to whether or not setting is good based on the increase-decrease value, even if the preceding set value is not stored. While both the actual operation time (measured value) and the increase-decrease value (increase-decrease amount) are displayed on the display screen in the present embodiment, it is only necessary that at least one of the actual operation time (measured value) and the increase-decrease value (increase-decrease amount) should be displayed. Displaying both the actual operation time and the increase-decrease value enhances the convenience for the user as a matter of course.

A one cycle time field 28Ea in Fig. 4 indicates, each time one cycle ends, the actual cycle time of the present cycle and the increase-decrease amount between the actual cycle time of the present cycle and the actual cycle time of the preceding cycle. In the example in Fig. 4, "10.56 seconds" corresponds to the actual cycle time of the present cycle, and "-0.13 seconds" corresponds to the increase-decrease amount of the present cycle with respect to the preceding cycle time. The increase-decrease amount is also computed by the computation section 23. In this example, it is known that the cycle time has been shortened by 0.13 seconds.

A consumed power field 28Eb in Fig. 4 indicates, each time one cycle ends, the total actual power consumed by all the drive motors in the present cycle and the increase-decrease amount between the total actual power consumed in the present cycle and the total actual power consumed in the preceding cycle. In the example in Fig. 4, "243" corresponds to the total actual power consumed in the present cycle and "-2.5" corresponds to the increase-decrease amount of the total power consumed in the present cycle with respect to the total power consumed in the preceding cycle. The increase-decrease amount is also computed by the computation section 23. In this example, it is known that the total consumed power has been reduced by 2.5 W.

In a consumed air amount field 28Ec indicates, each time one cycle ends, the amount of air consumed in the present cycle and the increase-decrease amount between the total actual amount of air consumed in the present cycle and the actual amount of air consumed in the preceding cycle. In the example in Fig. 4, "0.52" corresponds to the actual amount of air consumed in the present cycle, and "+0.1" corresponds to the increase-decrease amount of the total amount of air consumed in the present cycle with respect to the amount of air consumed in the preceding cycle. The increase-decrease amount is also computed by the computation section 23. In this example, it is known that the total amount of air consumed has been increased by 0.1Nl. In the present embodiment, the display control section 25 performs display such that the setting operation that is presently executed is distinguishable from the other setting operations while in operation. In the example in Fig. 4, the background color of a display portion for a setting item "T00: waiting for advancement to extraction of product" has been changed to indicate that the item is presently executed. This allows recognizing the item that is presently executed while in operation in one cycle, which enables set values for items executed before the item presently executed to be adjusted for the next cycle while in operation.

It is seen from the display illustrated in Fig. 4 how set values of the setting operations affect one cycle time, which enables a worker to gradually acquire a technique of selecting or adjusting effective set values, even if the worker is not an expert. In the present embodiment, each time a cycle ends after setting is made, the display screen 28 displays the set values for the setting operations for the teaching performed by the worker, the actual operation time corresponding to the set values, the increase-decrease value of the operation time of the setting operations, the cycle time, and the increase-decrease amount of the cycle time. Also, in the present embodiment, each time a cycle ends after setting is made, the display screen 28 displays the set values for the setting operations for the teaching performed by the worker, the actual consumed power and amount of consumed air corresponding to the set values, and the increase-decrease amounts of the actual consumed power and amount of consumed air. Thus, the worker can determine whether or not the set values contribute to a reduction in the actual operation time, by seeing the actual operation time, consumed power, and amount of consumed air when making an adjustment to shorten the take-out time and the cycle time.

In the present embodiment, setting or change can be made to display the operation time, the vibration, and the increase-decrease amount of the consumed power or the amount of consumed air at the time when at least one of the plurality of parameters is set or changed after the operation sequence is set, by operating a change setting button 28F. Thus, the present embodiment is not limited to display of the operation time during the teaching and the increase-decrease amount of the consumed power and the amount of consumed air.

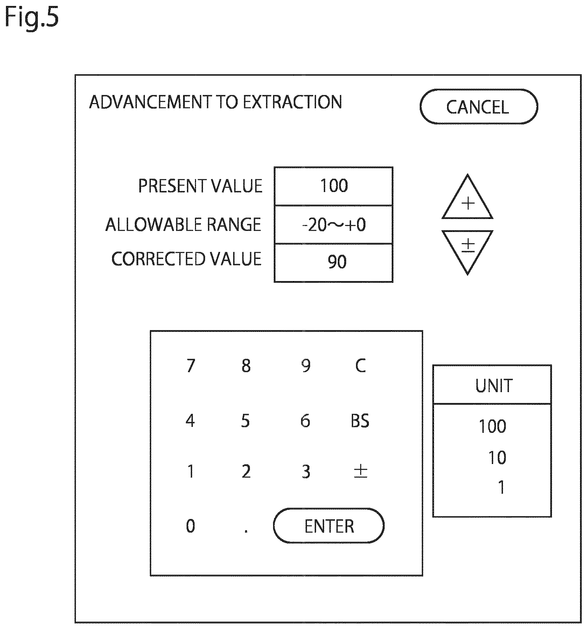

In the present embodiment, the display control section 25 is configured to change set values for a plurality of setting operations on the display screen or via a different display screen. Fig. 5 illustrates an example input screen for changing a set value. Fig. 5 illustrates an input screen for changing a set value for the setting item "advancement to extraction" in Fig. 4. While this screen may be displayed separately from the display screen in Fig. 4, the screen may be displayed over the screen in Fig. 4 to keep a part of the screen in Fig. 4 displayed. In the present embodiment, the set value change input screen in Fig. 5 can be displayed on the display screen by touching a "change setting" button 28F in Fig. 4 and then touching the setting item "advancement to extraction". This allows changing the set value for the setting operation while seeing the display result on the display screen, which enhances the workability. On the input screen in Fig. 5, the present value and the corrected value are indicated in terms of %. For the allowable range, a reduction amount and an increase amount allowed with reference to the present value are indicated in terms of %. The allowable range is stored in the allowable range storage section 29. The indication of the allowable range "-20 to +0" in Fig. 5 indicates that the set value can be reduced by up to 20% but cannot be increased to be larger than the present value. The allowable range is displayed on the display screen 28 for each cycle or for each process of the operation sequence. This allows a worker to adjust the parameters while checking display of the allowable range, even if the worker is inexperienced. Preferably, the allowable range of at least one of the parameters is prescribed for each cycle or for each process of the operation sequence with a constraint that the take-out time and the cycle time fall within a predetermined time range.

In Fig. 5, the unit of an increment or a decrement for one press of a "+" or **"-"** switch is determined by selecting the "unit". "100" in the "unit" field is pressed to select display in terms of %.

While the set values are indicated in terms of "%" with respect to the maximum value of the condition for the setting items in the above embodiment, the actual set values may be indicated as a matter of course.

### [Example 2]

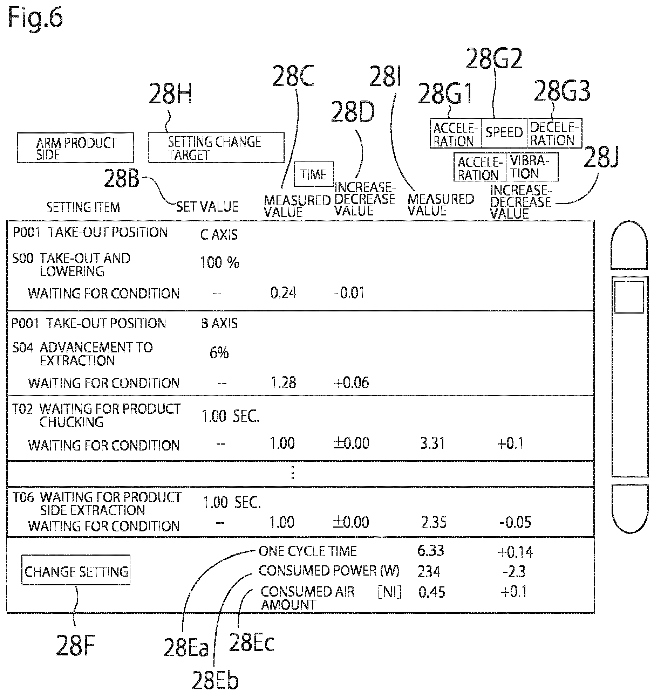

Fig. 6 illustrates a display example on the display screen 28 according to an example, in which an increase-decrease amount of a vibration generated in an operation portion for each cycle or for each process of the operation sequence is computed and the increase-decrease amount is displayed on the display section 27 so as to be checked. In the display example in Fig. 6, portions similar to those in the display example illustrated in Fig. 4 are given the same reference signs as those given in Fig. 4 and the description is omitted. The display example in Fig. 4 and the display example in Fig. 6 are different in the presence or absence of display of an acceleration (vibration) measured by the acceleration sensor that constitutes the vibration amplitude measurement section 19AX provided on the arm as the operation portion and configured to measure a vibration. In the display example in Fig. 6, the display screen 28 displays an increase-decrease amount of the acceleration (vibration) generated in the one or more operation portions for each cycle or for each process of the operation sequence when the teaching is performed and when a setting condition for the operation sequence stored in the operation sequence storage section 13 is changed. In Fig. 6, a field 28I indicates the vibration actually measured in each setting operation as the acceleration, and a field 28J indicates the increase-decrease amount between the preceding measured value of the acceleration and the current measured value of the acceleration. The measured value (actual acceleration) "3.31" in a "waiting for condition" field of "T02: waiting for product chucking" corresponds to the acceleration at the time when the take-out head moves from the "take-out position" to the "extraction position" in Fig. 2. The increase-decrease amount "+0.1" indicates that the acceleration has been increased, that is, the vibration has been increased. Knowing whether the acceleration has been increased or decreased allows actually feeling whether the setting is good or bad at actual time intervals. In addition, the worker that adjusts the parameters can be provided with vibration information for intuitively or sensuously determining whether or not the adjustment is appropriate, thereby making it possible to facilitate the adjustment of the parameters and shorten the time of the adjustment. In Fig. 6, acceleration values and increase-decrease values are indicated only for portions where a vibration needs to be measured.

While the acceleration (vibration) output from the vibration amplitude measurement section 19AX discussed earlier and the increase-decrease amount of the acceleration are displayed in the display example in Fig. 6, the measured values from the power measurement section 19AY and the air amount measurement section 19AZ discussed earlier and the increase-decrease amounts of the measured values may be displayed on the display screen together with the acceleration (vibration) and the increase-decrease amount of the acceleration by elaborating a display method as a matter of course. The input screen in Fig. 5 may be used in parallel with the display in Fig. 6 when the parameters are to be set or changed.

### INDUSTRIAL APPLICABILITY

In the present invention, an increase-decrease amount is computed in respect of at least one of the vibration generated in the one or more operation portions, the amount of power consumed by the one or more operation portions, and the amount of air consumed by the one or more operation portions for each cycle or for each process of the operation sequence stored in the operation sequence storage section 13 when the teaching is performed and when the setting condition for the operation sequence is changed, and the increase-decrease amount is displayed on the display section so as to be checked. Thus, the worker that adjusts the parameters can be provided with information for intuitively or sensuously determining whether or not the adjustment is appropriate. As a result, it is possible to facilitate the adjustment of the parameters and shorten the time of the adjustment.

## Claims

1. An apparatus for taking out a molded product, comprising:
an operation control section (9) configured to control operation to cause one or more operation portions including a take-out head (3) to operate according to an operation sequence set in advance through teaching and stored in an operation sequence storage section (13) to take out a molded product using the take-out head (3) from a die of a molding apparatus with the die being opened, and to carry the molded product to a predetermined position and release the molded product;
a parameter setting-change section (15) configured to set a plurality of parameters during the teaching and change at least one of the plurality of parameters after setting the operation sequence; and
a setting condition storage section (17) configured to store the parameters set by the parameter setting-change section (15) and the at least one of the plurality of parameters changed by the parameter setting-change section (15), **characterized in that** the apparatus further comprise:
a state measurement section (19A) configured to measure at least a vibration generated in the one or more operation portions during a period of one cycle since a plurality of setting operations are started until the setting operations are completed according to the operation sequence, whereby the one of more operation portions are determined in advance;
a measurement result storage section (21) configured to store a result of a measurement performed by the state measurement section (19A) for each cycle or for each process of the operation sequence; and
an increase-decrease amount computation-display section (20) configured to compute an increase-decrease amount of at least the vibration generated in the one or more operation portions for each cycle or for each process of the operation sequence based on data stored in the measurement result storage section (21) when the teaching is performed and when a setting condition for the operation sequence stored in the operation sequence storage section (13) is changed, and to display the increase-decrease amount on a display section (27) so as to be checked.

2. The apparatus for taking out a molded product according to claim 1, wherein
the increase-decrease amount computation-display section (20) includes
a computation section (23) configured to compute the increase-decrease amount based on a preceding measurement result and a current measurement result stored in the measurement result storage section (21), and
a display control section (25) configured to display the increase-decrease amount on the display section (27) for each cycle or for each process of the operation sequence.

3. The apparatus for taking out a molded product according to claim 1 or 2, further comprising
an operation time measurement section (19B) configured to measure an operation time since the operations are started until the operations are completed in respect of one or more of the plurality of setting operations, wherein:
the measurement result storage section (21) stores the operation time along with the measurement result; and
the increase-decrease amount computation-display section (20) synchronously displays an increase-decrease amount of the operation time on the display section (27) along with the increase-decrease amount.

4. The apparatus for taking out a molded product according to claim 1 or 3, wherein
the increase-decrease amount computation-display section (20) displays the changed parameter on the display section (27) along with the increase-decrease amount.

5. The apparatus for taking out a molded product according to claim 1 or 2, wherein
the at least one of the parameters includes any of a stop position at which the take-out head (3) or a take-out head mount portion to which the take-out head (3) is mounted is stopped at a teaching point, a timer time limit for which the take-out head (3) is kept stationary, a speed or an acceleration at which the take-out head (3) or the take-out head mount portion is moved, a drive voltage, a drive current, or drive torque for a drive motor for the apparatus, and a degree of opening or an open or close time of a control valve disposed in an air supply path for the take-out head (3).

6. The apparatus for taking out a molded product according to claim 1 or 2, wherein:
the vibration is generated by the take-out head (3), a take-out head mount portion to which the take-out head (3) is mounted, or a posture change device operable to change a posture of the take-out head (3);
the state measurement section (19A) is a vibration amplitude measurement section configured to detect a frequency or an amplitude of the vibration; and
the vibration amplitude measurement section measures a vibration generated at every teaching point or a teaching point determined in advance in the operation sequence, and measures the vibration in each cycle of the operation sequence or for each operation process of the operation sequence.

7. The apparatus for taking out a molded product according to claim 1 or 2, wherein:
the state measurement section (19A) further measures an amount of power consumed by the one or more operation portions;
the amount of consumed power is an amount of power consumed by an electric motor for driving the apparatus for taking out a molded product;
the state measurement section (19A) is a power measurement section configured to measure power to be supplied to the electric motor for driving the apparatus; and
the power measurement section measures an amount of power supplied to the electric motor in each cycle of the operation sequence or for each process of the operation sequence.

8. The apparatus for taking out a molded product according to claim 1 or 2, wherein:
the state measurement section (19A) further measures an amount of air consumed by the one or more operation portions; the amount of consumed air is an amount of air consumed by an air compressor of the apparatus for taking out a molded product;
the state measurement section (19A) is an air amount measurement section configured to measure an amount of air output from the air compressor; and
the air amount measurement section measures an amount of air output from the air compressor in each cycle of the operation sequence or for each process of the operation sequence.

## Patentansprüche

1. Gerät zum Entnehmen eines geformten Produkts, umfassend:
einen Betriebssteuerungsabschnitt (9), der dazu konfiguriert ist, einen Betrieb so zu steuern, dass ein oder mehrere Betriebsabschnitte, einschließlich eines Entnahmekopfs (3), gemäß einer im Voraus durch Einlernen festgelegten und in einem Betriebsablauf-Speicherabschnitt (13) gespeicherten Betriebsablauffolge betrieben werden, um unter Verwendung des Entnahmekopfs (3) ein geformtes Produkt bei geöffneter Form aus einer Form eines Formgeräts zu entnehmen und das geformte Produkt zu einer vorbestimmten Position zu transportieren und das geformte Produkt freizugeben;
einen Parametereinstellungs-Änderungsabschnitt (15), der dazu konfiguriert ist, während des Einlernens eine Mehrzahl von Parametern einzustellen und nach dem Einstellen der Betriebsablauffolge mindestens einen von der Mehrzahl von Parametern zu ändern; und
einen Einstellbedingungs-Speicherabschnitt (17), der dazu konfiguriert ist, die durch den Parametereinstellungs-Änderungsabschnitt (15) eingestellten Parameter und den mindestens einen von der Mehrzahl von Parametern, der durch den Parametereinstellungs-Änderungsabschnitt (15) geändert wurde, zu speichern, **dadurch gekennzeichnet, dass** das Gerät ferner umfasst:
einen Zustandsmessabschnitt (19A), der dazu konfiguriert ist, mindestens eine in dem einen oder den mehreren Betriebsabschnitten erzeugte Vibration während eines Zeitraums eines Zyklus zu messen, seit eine Mehrzahl von Einstellvorgängen gestartet wird, bis die Einstellvorgänge gemäß der Betriebsablauffolge abgeschlossen sind, wobei der eine oder die mehreren Betriebsabschnitte im Voraus bestimmt werden;
einen Messergebnis-Speicherabschnitt (21), der dazu konfiguriert ist, ein Ergebnis einer durch den Zustandsmessabschnitt (19A) durchgeführten Messung für jeden Zyklus oder für jeden Prozess der Betriebsablauffolge zu speichern; und
einen Zunahme-Abnahme-Betrags-Berechnungs-Anzeigeabschnitt (20), der dazu konfiguriert ist, einen Zunahme-Abnahme-Betrag von mindestens der in dem einen oder den mehreren Betriebsabschnitten erzeugten Vibration für jeden Zyklus oder für jeden Prozess der Betriebsablauffolge basierend auf Daten zu berechnen, die in dem Messergebnis-Speicherabschnitt (21) gespeichert sind, wenn das Einlernen durchgeführt wird und wenn eine in dem Betriebsablauf-Speicherabschnitt (13) gespeicherte Einstellbedingung für die Betriebsablauffolge geändert wird, und den Zunahme-Abnahme-Betrag auf einem Anzeigeabschnitt (27) so anzuzeigen, dass er überprüft werden kann.

2. Gerät zum Entnehmen eines geformten Produkts nach Anspruch 1, wobei
der Zunahme-Abnahme-Betrags-Berechnungs-Anzeigeabschnitt (20) beinhaltet:
einen Berechnungsabschnitt (23), der dazu konfiguriert ist, den Zunahme-Abnahme-Betrag basierend auf einem vorhergehenden Messergebnis und einem aktuellen Messergebnis zu berechnen, die in dem Messergebnis-Speicherabschnitt (21) gespeichert sind, und
einen Anzeigesteuerungsabschnitt (25), der dazu konfiguriert ist, den Zunahme-Abnahme-Betrag auf dem Anzeigeabschnitt (27) für jeden Zyklus oder für jeden Prozess der Betriebsablauffolge anzuzeigen.

3. Gerät zum Entnehmen eines geformten Produkts nach Anspruch 1 oder 2, ferner umfassend:
einen Betriebszeit-Messabschnitt (19B), der dazu konfiguriert ist, eine Betriebszeit zu messen, seit die Vorgänge gestartet werden, bis die Vorgänge in Bezug auf einen oder mehrere von der Mehrzahl von Einstellvorgängen abgeschlossen sind, wobei:
der Messergebnis-Speicherabschnitt (21) die Betriebszeit zusammen mit dem Messergebnis speichert; und
der Zunahme-Abnahme-Betrags-Berechnungs-Anzeigeabschnitt (20) synchron einen Zunahme-Abnahme-Betrag der Betriebszeit auf dem Anzeigeabschnitt (27) zusammen mit dem Zunahme-Abnahme-Betrag anzeigt.

4. Gerät zum Entnehmen eines geformten Produkts nach Anspruch 1 oder 3, wobei
der Zunahme-Abnahme-Betrags-Berechnungs-Anzeigeabschnitt (20) den geänderten Parameter auf dem Anzeigeabschnitt (27) zusammen mit dem Zunahme-Abnahme-Betrag anzeigt.

5. Gerät zum Entnehmen eines geformten Produkts nach Anspruch 1 oder 2, wobei
der mindestens eine der Parameter jegliches von einer Stoppposition, an der der Entnahmekopf (3) oder ein Entnahmekopf-Montageabschnitt, an dem der Entnahmekopf (3) montiert ist, an einem Einlernpunkt gestoppt wird, einer Timer-Zeitgrenze, für die der Entnahmekopf (3) stationär gehalten wird, einer Geschwindigkeit oder einer Beschleunigung, mit der der Entnahmekopf (3) oder der Entnahmekopf-Montageabschnitt bewegt wird, einer Antriebsspannung, einem Antriebsstrom, oder einem Antriebsdrehmoment für einen Antriebsmotor für das Gerät, und einem Öffnungsgrad oder einer Öffnungs- oder Schließzeit eines in einem Luftzufuhrpfad für den Entnahmekopf (3) angeordneten Steuerventils beinhaltet.

6. Gerät zum Entnehmen eines geformten Produkts nach Anspruch 1 oder 2, wobei:
die Vibration durch den Entnahmekopf (3), einen Entnahmekopf-Montageabschnitt, an dem der Entnahmekopf (3) montiert ist, oder eine Lageänderungsvorrichtung erzeugt wird, die dazu betreibbar ist, eine Lage des Entnahmekopfs (3) zu ändern;
der Zustandsmessabschnitt (19A) ein Vibrationsamplituden-Messabschnitt ist, der dazu konfiguriert ist, eine Frequenz oder eine Amplitude der Vibration zu detektieren; und
der Vibrationsamplituden-Messabschnitt eine an jedem Einlernpunkt oder an einem im Voraus in der Betriebsablauffolge bestimmten Einlernpunkt erzeugte Vibration misst und die Vibration in jedem Zyklus der Betriebsablauffolge oder für jeden Prozess der Betriebsablauffolge misst.

7. Gerät zum Entnehmen eines geformten Produkts nach Anspruch 1 oder 2, wobei:
der Zustandsmessabschnitt (19A) ferner einen Betrag an von dem einen oder den mehreren Betriebsabschnitten verbrauchter Leistung misst;
der Betrag an verbrauchter Leistung ein Betrag an von einem Elektromotor zum Antrieb des Geräts zum Entnehmen eines geformten Produkts verbrauchter Leistung ist;
der Zustandsmessabschnitt (19A) ein Leistungsmessabschnitt ist, der dazu konfiguriert ist, eine dem Elektromotor zum Antreiben des Geräts zuzuführende Leistung zu messen; und
der Leistungsmessabschnitt einen Betrag an dem Elektromotor zugeführter Leistung in jedem Zyklus der Betriebsablauffolge oder für jeden Prozess der Betriebsablauffolge misst.

8. Gerät zum Entnehmen eines geformten Produkts nach Anspruch 1 oder 2, wobei:
der Zustandsmessabschnitt (19A) ferner einen Betrag an von dem einen oder den mehreren Betriebsabschnitten verbrauchter Luft misst;
der Betrag an verbrauchter Luft ein Betrag an von einem Luftkompressor des Geräts zum Entnehmen eines geformten Produkts verbrauchter Luft ist;
der Zustandsmessabschnitt (19A) ein Luftmengen-Messabschnitt ist, der dazu konfiguriert ist, einen Betrag an von dem Luftkompressor ausgegebener Luft zu messen; und
der Luftmengen-Messabschnitt einen Betrag an von dem Luftkompressor ausgegebener Luft in jedem Zyklus der Betriebsablauffolge oder für jeden Prozess der Betriebsablauffolge misst.

## Revendications

1. Une installation de démoulage d'un produit moulé, comprenant :
une section (9) de commande de fonctionnement configurée pour commander le fonctionnement pour faire qu'une ou plusieurs parties de fonctionnement incluant une tête (3) de démoulage fonctionne suivant une séquence de fonctionnement réglée à l'avance par apprentissage et mise en mémoire dans une section (13) de mise en mémoire de séquence de fonctionnement pour démouler un produit moulé en utilisant la tête (3) de démoulage d'un moule d'une installation de moulage, alors que le moule est ouvert, et pour porter le produit moulé à une position déterminée à l'avance, et relâcher le produit moulé ;
une section (15) de changement de réglage de paramètres configurée pour régler une pluralité de paramètres pendant l'apprentissage et changer au moins l'un de la pluralité de paramètres après avoir réglé la séquence de fonctionnement ; et
une section (17) de mise en mémoire de l'état de réglage configurée pour mettre en mémoire les paramètres réglés par la section (15) de changement de réglage de paramètres et le au moins l'un de la pluralité de paramètres changés par la section (15) de changement de réglage de paramètres, **caractérisée en ce que** l'installation comprend en outre :
une section (19A) de mesure d'état configurée pour mesurer au moins une vibration créée dans la une ou les plusieurs parties de fonctionnement pendant une durée d'un seul cycle depuis qu'une pluralité d'opérations de réglage ont commencé jusqu'à ce que les opérations de réglage soient achevées suivant la séquence de fonctionnement, dans laquelle la une ou les plusieurs parties de fonctionnement sont déterminées à l'avance ;
une section (21) de mise en mémoire de résultat de mesure configurée pour mettre en mémoire un résultat d'une mesure effectuée par la section (19A) de mesure d'état pour chaque cycle ou pour chaque processus de la séquence de fonctionnement ; et
une section (20) d'affichage de calcul d'une quantité d'augmentation-diminution pour calculer une quantité d'augmentation-diminution d'au moins la vibration créée dans la une ou les plusieurs parties de fonctionnement pour chaque cycle ou pour chaque processus de la séquence de fonctionnement sur la base de données mise en mémoire dans la section (21) de mise en mémoire de résultat de mesure, lorsque l'apprentissage est effectué et lorsqu'un état de réglage de la séquence de fonctionnement mis en mémoire dans la section (13) de mise en mémoire de séquence de fonctionnement est changé, et pour afficher la quantité d'augmentation-diminution sur une section (27) d'affichage, de manière à la vérifier.

2. L'installation de démoulage d'un produit moulé suivant la revendication 1, dans laquelle
la section (20) d'affichage de calcul de la quantité d'augmentation-diminution comprend
une section (23) de calcul configurée pour calculer la quantité d'augmentation-diminution sur la base d'un résultat précédent de mesure et d'un résultat en cours de mesure mis en mémoire dans la section (21) de mise en mémoire de résultat de mesure, et
une section (25) de commande d'affichage configurée pour afficher la quantité d'augmentation-diminution sur la section (27) d'affichage pour chaque cycle ou pour chaque processus de la séquence de fonctionnement.

3. L'installation de démoulage d'un produit moulé suivant la revendication 1 ou 2, comprenant en outre
une section (19B) de mesure du temps de fonctionnement configurée pour mesurer un temps de fonctionnement depuis que les opérations ont commencé jusqu'à ce que les opérations soient achevées en ce qui concerne une ou plusieurs de la pluralité d'opérations de réglage, dans laquelle :
la section (21) de mise en mémoire de résultat de mesure met en mémoire le temps de fonctionnement en même temps que le résultat de mesure ; et
la section (20) d'affichage de calcul de la quantité d'augmentation-diminution affiche en synchronisme une quantité d'augmentation-diminution du temps de fonctionnement sur la section (27) d'affichage en même temps que la quantité d'augmentation-diminution.

4. L'installation de démoulage d'un produit moulé suivant la revendication 1 ou 3, dans laquelle
la section (20) d'affichage de calcul de la quantité d'augmentation-diminution affiche le paramètre modifié sur la section (27) d'affichage en même temps que la quantité d'augmentation-diminution.

5. L'installation de démoulage d'un produit moulé suivant la revendication 1 ou 2, dans laquelle
le au moins un des paramètres comprend l'un quelconque d'une position d'arrêt ou la tête (3) de démoulage ou une partie de montage de la tête de démoulage ou une partie de montage de la tête de démoulage, à laquelle la tête (3) de démoulage est montée, est arrêtée à un point d'apprentissage, une limite de temps de minuterie pendant laquelle la tête (3) de démoulage est maintenue fixe, une vitesse ou une accélération à laquelle la tête (3) de démoulage ou la partie de montage de la tête de démoulage est déplacée, une tension d'entraînement, un courant d'entraînement ou un couple d'entraînement pour un moteur d'entraînement de l'installation, et un degré d'ouverture ou un temps d'ouverture ou de fermeture d'une vanne de commande disposé dans un chemin d'alimentation en air de la tête (3) de démoulage.

6. L'installation de démoulage d'un produit moulé suivant la revendication 1 ou 2, dans laquelle :
la vibration est créée par la tête (3) de démoulage, une partie de montage de la tête de démoulage, à laquelle la tête (3) de démoulage est montée, ou un dispositif de changement de posture pouvant fonctionner pour changer une posture de la tête (3) de démoulage ;
la section (19A) de mesure d'état est une section de mesure de l'amplitude de vibration configurée pour détecter une fréquence ou une amplitude de la vibration ; et
la section de mesure de l'amplitude d'une vibration mesure une vibration créée à chaque point d'apprentissage ou à un point d'apprentissage déterminé à l'avance dans la séquence de fonctionnement et mesure la vibration dans chaque cycle de la séquence de fonctionnement pour chaque processus de fonctionnement de la séquence de fonctionnement.

7. L'installation de démoulage d'un produit moulé suivant la revendication 1 ou 2, dans laquelle :
la section (19A) de mesure d'état mesure en outre une quantité de puissance consommée par la une ou les plusieurs parties de fonctionnement ;
la quantité de puissance consommée est une quantité de puissance consommée par un moteur électrique pour entraîner l'installation de démoulage d'un produit moulé ;
la section (19A) de mesure d'état est une section de mesure de puissance configurée pour mesurer une puissance à fournir au moteur électrique pour entraîner l'installation ; et
la section de mesure de puissance mesure une quantité de puissance envoyée au moteur électrique dans chaque cycle de la séquence de fonctionnement ou pour chaque processus de la séquence de fonctionnement.

8. L'installation de démoulage d'un produit moulé suivant la revendication 1 ou 2, dans laquelle :
la section (19A) de mesure d'état mesure en outre une quantité d'air consommée par la une ou les plusieurs parties de fonctionnement ; la quantité d'air consommée est une quantité d'air consommée par un compresseur d'air de l'installation pour démouler un produit moulé ;
la section (19A) de mesure d'état est une section de mesure de quantité d'air configurée pour mesurer une quantité d'air sortie du compresseur d'air ; et
la section de mesure de quantité d'air mesure une quantité d'air sortie du compresseur d'air dans chaque cycle de la séquence de fonctionnement ou pour chaque processus de la séquence de fonctionnement.
